Europäisches Patentamt

European Patent Office

Office européen des brevets

(19)

(11) Numéro de publication: **0 263 026 B1**

(12) **FASCICULE DE BREVET EUROPEEN**

(45) Date de publication de fascicule du brevet:
04.09.91

(51) Int. Cl.⁵: **H05B 39/04**

(21) Numéro de dépôt: **87402164.5**

(22) Date de dépôt: **29.09.87**

(54) **Dispositif d'alimentation électrique d'une source lumineuse utilisant des lampes à halogène.**

(30) Priorité: **30.09.86 FR 8613582**

(43) Date de publication de la demande:
**06.04.88 Bulletin 88/14**

(45) Mention de la délivrance du brevet:
**04.09.91 Bulletin 91/36**

(84) Etats contractants désignés:
**AT BE CH DE ES GB IT LI LU NL SE**

(56) Documents cités:
**FR-A- 2 313 837
US-A- 4 234 820
US-A- 4 347 461**

(73) Titulaire: **SOCIETE D'ETUDES POUR LE DEVE-
LOPPEMENT DES PRODUCTIONS ELECTRO-
NIQUES société anonyme
Hameau de Sainte-Appoline R.N. 12
F-78372 Plaisir Cédex(FR)**

(72) Inventeur: **Le Gars, Jacques
20, rue de la Citadelle
F-78950 Gambais(FR)**

(74) Mandataire: **Rodhain, Claude et al
Cabinet Claude Rodhain 30, rue la Boétie
F-75008 Paris(FR)**

Rank Xerox (UK) Business Services

## Description

La présente invention concerne un dispositif d'alimentation électrique qui est destiné à alimenter une source lumineuse qui comporte des lampes à halogène. Les lampes à halogène sont de plus en plus utilisées à cause de leur rendement; on en utilise par exemple dans les dispositifs de signalisation ou d'affichage tels que les panneaux de signalisation d'autoroutes. Dans ce dernier cas, les panneaux sont généralement difficiles d'accès et leur maintenance pose des problèmes. C'est pourquoi il est souhaitable d'augmenter la durée de vie des lampes à halogène utilisées afin de réduire les opérations de maintenance. Ainsi par exemple, la durée de vie de ces lampes à halogène est d'environ 3000 heures ce qui entraîne des opération de maintenance plusieurs fois par an.

Par ailleurs, l'efficacité d'un dispositif d'affichage ou de signalisation est fonction du contraste avec la luminosité ambiante et, par exemple dans lesdits panneaux d'affichage d'autoroutes on prévoit simplement une position "jour" dans laquelle les ampoules à halogène sont alimentées sous 12 V et une position "nuit" dans laquelle les ampoules à halogène sont alimentées sous 6 V . Si le contraste est trop élevé (supérieur à 7 ou 8), il y a une perte de visibilité et les ampoules utilisées sont alors suralimentées ce qui entraîne en plus une perte de puissance.

La présente invention a donc pour objet un dispositif d'alimentation électrique d'une source lumineuse comportant des lampes à halogène qui permet à la fois d'augmenter la durée de vie des lampes et d'augmenter l'efficacité des dispositifs d'affichage ou de signalisation utilisant ces lampes.

Le dispositif d'alimentation selon l'invention est notamment remarquable en ce qu'il comporte une unité d'alimentation électrique à découpage dont la tension de sortie est réglée par un régulateur recevant une valeur de consigne fournie à partir d'un détecteur de luminosité ambiante et une valeur réelle fournie par un détecteur de la luminosité de la source lumineuse à halogène.

L'unité d'alimentation à découpage comportant un dispositif de lissage, on élimine les vibrations du filament des lampes qui sont généralement alimentés en courant alternatif à 50 Hz et il en résulte une augmentation de leur durée de vie. Par ailleurs, la régulation permet d'une part d'obtenir le meilleur rendement des dispositif d'affichage ou de signalisation utilisant les lampes à halogène et d'autre part, elle permet de limiter la puissance fournie aux lampes; Or, la durée de vie des lampes à halogène augmente lorsqu'elles sont utilisées à puissance réduite.

Selon une autre caractéristique de l'invention, l'unité d'alimentation électrique à découpage comporte un limiteur de courant. Grace à cette disposition , le courant traversant le filament est limité et on élimine les chocs thermiques, en particulier lors de l'amorçage de ces lampes à halogène, ce qui est particulièrement intéressant pour les dispositif d'affichage ou de signalisation à clignotement, puisque dans ce cas, la lampe à halogène est soumise à des amorçages très fréquents.

Selon encore une autre caractéristique de l'invention, le détecteur de la luminosité ambiante est constituée de plusieurs capteurs qui sont disposés selon des directions différentes et dont les signaux sont corrélés entre eux. De cette manière, on peut améliorer notablement l'efficacité de la régulation et obtenir la meilleure utilisation des lampes à halogène.

Avantageusement, les lampes à halogène sont choisies de manière que, lorsqu'elles sont neuves, la tension maximale de réglage est inférieure à leur tension d'utilisation nominale. De cette manière, les lampes à halogène sont utilisées à puissance réduite, tout au moins lorsqu'elles n'ont pas subi de vieillissement important.

Le dispositif d'alimentation électrique selon l'invention peut comporter un détecteur de vieillissement constitué par un comparateur qui compare la luminosité réelle fournie par la lampe pour la tension maximale de réglage à un signal de butée correspondant à une valeur de luminosité inférieure à celle fournie par une lampe neuve pour cette même tension maximale de réglage et qui fournit une alarme lorsque la valeur de la luminosité réelle fournie par la lampe devient inférieure au signal de butée précité. Cette alarme avertit que la lampe à halogène a subi un vieillisement tel que l'on ne pourra plus assurer le contraste optimal lorsque la luminosité ambiante est maximale.

La valeur de la butée déclenchant l'alarme peut être choisie égale ou inférieure à la valeur maximale possible de la luminosité pouvant être fournie par la lampe. En effet, l'oeil n'étant sensible qu'à des variations de lumière qui sont au moins égales à 2, on peut donc choisir une butée correspondant à 50% de la luminosité fournie par une lampe neuve pour la tension maximale de réglage, ce qui permet encore d'augmenter la durée de fonctionnement de la lampe.

La valeur réelle de la luminosité peut être mesurée au moyen d'une fibre optique reliant au moins une lampe à halogène au détecteur de luminosité de la source lumineuse.

Selon encore une autre caractéristique de l'invention, dans le cas où les lampes à halogène alimentent un faisceau de fibres optiques constituant par exemple des points d'affichage, on utilise des lampes à halogène présentant une distance focale élevée, ce qui permet d'utiliser un faisceau de fibres optiques en matière synthétique; l'utilisation de fibres optiques en matière synthétique au lieu de fibres optiques en verre permet de réduire considérablement le prix de revient du dispositif d'affichage ou de signalisation utilisant la source lumineuse à lampes à halogène.

Dans le cas d'un panneau lumineux de signalisation et/ou d'affichage, le détecteur de luminosité ambiante peut être constitué d'un capteur dirigé vers l'avant du panneau, d'un capteur dirigé vers l'arrière du panneau et d'un capteur dirigé vers le haut.

D'autres caractéristiques et avantages de l'invention ressortiront de la description qui suit, ainsi que des dessins ci-annexés sur lesquels :
- la Fig.1 est un schéma d'une installation d'affichage comportant un dispositif d'alimentation électrique conforme à la présente invention et,
- la Fig.2 illustre par un schéma l'application de l'invention à un dispositif de signalisation à clignotement.

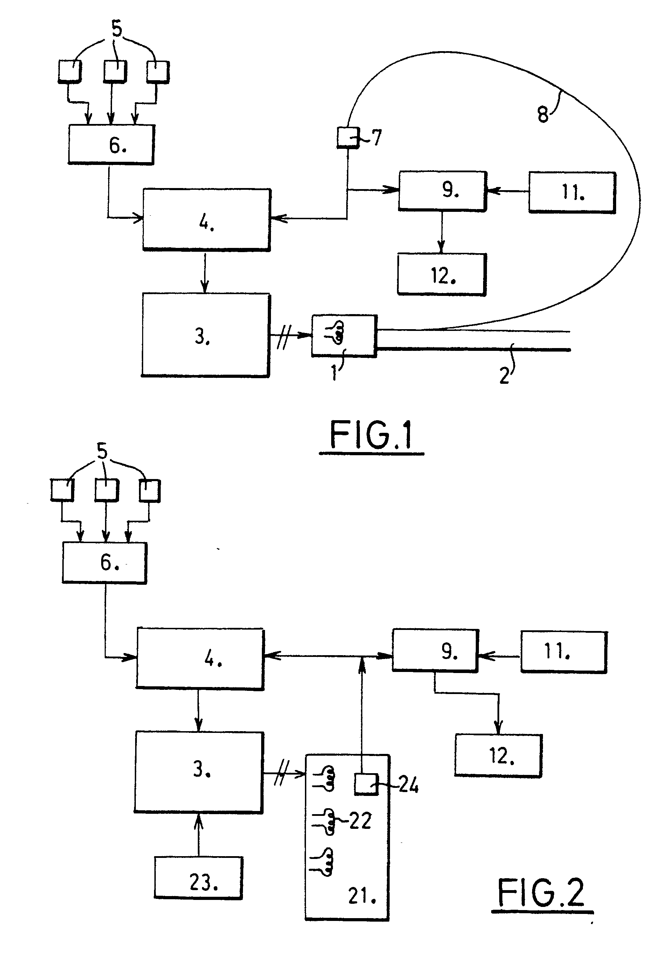

On a représenté sur la figure 1 un dispositif d'affichage qui comporte une source lumineuse 1 comportant au moins une lampe ou ampoule à halogène qui éclaire un faisceau de fibres optiques 2, les différentes fibres optiques alimentant des éléments individuels d'affichage lumineux. Il peut s'agir par exemple d'un dispositif d'affichage tel que décrit dans la demande de brevet français 85 11 176 du 22 juillet 1985 et qui comprend une matrice de points constitués chacun par une cellule élémentaire d'affichage comportant une plaque présentant une face réfléchissante et une face noire, ladite plaque étant montée à pivotement entre une position active ou elle présente la face réfléchissante et une position de repos où elle présente la face noire, l'extrémité d'une fibre optique étant disposée derrière ladite plaque qui comporte un trou disposé en regard de l'extrémité de ladite fibre optique lorsque ladite plaque se trouve en position active.

Conformément à l'invention, l'alimentation électrique des différentes ampoules à halogène est réalisée au moyen d'une unité d'alimentation à découpage 3 qui comporte un dispositif de lissage de manière à fournir une tension moyenne quasi-continue.

Conformément à l'invention, on prévoit un régulateur 4 de la tension de sortie de l'unité d'alimentation 3. Ce régulateur reçoit tout d'abord une valeur de con signe qui est fournie par un détecteur de la luminosité ambiante. Ce détecteur comporte plusieurs capteurs 5, 3 dans l'exemple représenté, dont les signaux de sortie sont corrélés dans un circuit 6 de manière à obtenir une valeur de consigne représentative de la luminosité ambiante.

Le régulateur 4 reçoit par ailleurs un signal correspondant à la valeur réelle de la luminosité fournie par la source lumineuse 1; cette valeur réelle est fournie par un capteur 7 qui, dans le cas d'une source lumineuse alimentant un faisceau de fibres optiques est alimenté par une fibre optique 8 du faisceau 2.

Conformément à l'invention, les lampes à halogène utilisées dans la source lumineuse 1 sont choisies de telle manière que lorsqu'elles sont neuves, la tension maximale de réglage, c'est à dire la tension correspondant à un découpage à cent pour cent de l'unité d'alimentation 3, est inférieure à leur tension d'utilisation nominale. Ainsi par exemple au lieu d'utiliser des ampoules à halogène fournissant une puissance de 50W sous une tension de 12V et pour lesquelles la durée de vie indiquée est de 3000 Heures, on peut conformément à l'invention, utiliser des ampoules fournissant 75 W pour une tension nominale de 12 V en les utilisant à tension réduite, la puissance de 50W étant fournie pour une tension de 10V. Le fait d'utiliser les lampes à halogène sous tension réduite et à puissance réduite réduit notablement les phénomènes de vieillissement et on peut ainsi grâce à l'utilisation à puissance réduite obtenir une durée de vie de 10000 heures.

Selon l'invention, on prévoit un détecteur de vieillissement qui fournit une alarme lorsque la valeur réelle de la luminosité de la source lumineuse pour la tension maximale de réglage devient inférieure à une valeur de luminosité à celle fournie par une lampe neuve pour cette même tension maximale de régalge. Dans l'exemple représenté, ce détecteur de butée comporte essentiellement un comparateur 9 qui reçoit d'une part le signal fourni par le capteur 7 de luminosité réelle et d'autre part une valeur de butée réglable fournie par un circuit 11. Pour détecter si une ampoule à halogène a atteint un vieillissement tel qu'elle ne puisse plus fournir un contraste suffisant pour la valeur maximale de la luminosité ambiante, on alimente alimente ladite ampoule à la tension maximale d'utilisation (100% de découpage) et si la valeur du signal fourni par le capteur 7 est inférieure à la valeur du signal de butée fourni par le circuit 11, le comparateur 9 agit sur un circuit d'alarme 12 qui peut fournir une alarme visuelle ou même fournir une alarme à un système central de surveillance par un dispositif de télécommunication. La butée fournie par le circuit (11) peut être choisie pour correspondre à au moins 50% de la luminosité fournie par une lampe neuve pour la tension maximale de réglage. En effet, une baisse de luminosité de 50% est tout juste perçue par l'oeil humain.

Si l'on choisit une valeur de butée un peu supérieure à 50%, on disposera alors encore d'une réserve de puissance et cela permet en particulier de supprimer les ampoules de rechange qui sont prévues dans des dispositifs de signalisation connus qui comportent un dispositif faisant basculer l'alimentation sur les ampoules de secours lorsque l'ampoule normale ne fournit plus la puissance nécessaire. La suppression de cette ampoule de secours permet un réduction important du prix de revient, car non seulement on supprime cette ampoule mais on supprime aussi le faisceau de fibres optiques qui était utilisé avec les ampoules de secours. Il en résulte donc une économie notable en ce qui concerne le prix de revient ainsi qu'un gain en luminosité puisqu'on utilise mieux le faisceau utile des ampoules.

On peut également détecter le vieillissement d'une lampe en mesurant la tension de réglage que l'on doit appliquer pour que cette lampe fournisse une luminosité donnée. Par exemple, on peut enregistrer un certain nombre de valeurs de tension d'alimentation correspondant à certains valeurs de luminosité pour une lampe neuve. A titre d'exemple, si une lampe neuve fournit une luminosité de 20 candelas sou 12 V et une luminosité de 10 candelas sous 9,5V, on pourra comparer la tension d'alimentation nécessaire pour obtenir une luminosité de 10 candelas avec une ampoule usagée avec la valeur de 9,5 V d'une lampe neuve, la valeur de butée étant alors supérieure à la valeur pour une lampe neuve ; si on choisit une butée supérieure de 20%, lorsque la tension d'alimentation sera de 10,5 V pour une luminosité de 10 candelas, le comparateur fournira un signal d'alarme indiquant que la lampe considérée a franchi le seuil du vieillissement.

Sur l'exemple de réalisation de la figure 1, on a représenté trois capteurs simples qui servent à déterminer la valeur de consigne ; ces capteurs peuvent être par exemple disposés respectivement de manière et vers le haut du panneau utilisant la source lumineuse à halogène. Le circuit de corrélation 6 fournit une valeur de consigne optimale en fonstion des mesures données par les trois capteurs 5.

Avantageusement, l'unité d'alimentation comporte un circuit de limitation du courant, ce qui permet de supprimer les pointes de courant en particulier lors de l'amorçage des ampoules ; ces pointes de courant entraînent en fait des chocs thermiques importants sur le filament de l'ampoule. Ceci présente un très gros avantage dans le cas d'ampoules qui sont employées de manière clignotante puisqu'lles sont soumises à un cycle important d'allumages.

Pour limiter encore le prix de revient des dispositifs de signalisation et/ou d'affichage utilisant des ampoules à halogène éclairant un faisceau de fibres optiques, on choisit des ampoules à halogène dont la distance focale est importante ; cela permet d'éloigner l'extrémité du faisceau 2. On peut alors utiliser des fibres optiques en matière synthétique au lieu des fibres optiques en verre ce qui permet de limiter le prix de revient dans une proportion importante.

Sur la figure 2 on a représenté un autre exemple d'application de l'invention à un appareil d'affichage et/ou de signalisation qui comporte une source lumineuse 21 qui comprend plusieurs ampoules à halogène 22 dont l'énergie lumineuse est utilisée directement sans interposition de fibres optiques. Il peut s'agir par exemple d'un dispositif de signalisation par clignotement. Dans ce cas, comme cela a été exposé plus haut, il est particulièrement important que l'unité d'alimentation 3 comporte un limiteur de courant. On a représenté en 23 une unité de commande du fonctionnement en clignotement de la source 21. Dans cet exemple de réalisation, la valeur réelle de la luminosité est obtenue au moyen d'un cpateur 24 disposé à proximité d'une des ampoules 22.

On voit que l'invention permet d'augmenter de manière très notable la durée de vie des ampoules à halogène utilisées dans les dispositifs d'affichage et de signalisation, ce qui entraîne en particulier une réduction importante des opérations de maintenance et la possibilité de supprimer des ampoules de rechange. Par ailleurs, les sources lumineuses conformes à la présente invention ont une structure et un prix de revient fortement réduits puisque la suppression des ampoules de rechange réduit le nombre des composants.

**Revendications**

1. Dispositif d'alimentation électrique d'une source lumineuse pour affichage et/ou signalisation (1, 21) utilisant des lampes à halogène, du type comportant des moyens d'alimentation électriques (3) fournissant une tension de sortie variable appliquée à ladite source lumineuse, des moyens de régulation (4) reliés aux moyens d'alimentation pour réguler ladite tension de sortie en réponse à des valeurs de luminosité délivrés à partir de moyens détecteurs de luminosité, caractérisé en ce que :

lesdits moyens détecteurs de luminosité sont constitués d'un détecteur de la luminosité ambiante (5, 6) et d'un détecteur de la luminosité réelle (7, 24) de ladite source lumineuse pour fournir respectivement une valeur de consigne et une valeur réelle auxdits moyens de régulation de manière à maintenir un contraste optimal et en ce qu'il comporte en outre des moyens de détection de vieillissement constitués par un comparateur (9) qui compare ladite valeur réelle pour une tension maximale de réglage appliquée à la source lumineuse à une valeur de butée correspondant à une valeur de luminosité réelle prise inférieure à celle d'une lampe neuve de la source lumineuse alimentée avec la même tension maximale de réglage pour fournir un signal d'alarme lorsque la valeur réelle devient inférieure à la valeur de butée.

2. Dispositif d'alimentation électrique selon la revendication 1, caractérisé en ce que les moyens d'alimentation sont constitués d'une alimentation électrique à découpage (3) comportant un limiteur de courant.

3. Dispositif d'alimentation électrique selon l'une des revendications 1 ou 2, caractérisé en ce que le détecteur de la luminosité ambiante comprend plusieurs capteurs (5) qui sont disposés selon des directions différentes et dont les signaux sont corrélés entre eux.

4. Dispositif d'alimentation électrique selon l'une quelconque des revendications 1 à 3, caractérisé en ce que les lampes à halogène (22) sont choisies de manière que lorsqu'elles sont neuves, la tension maximale de réglage est inférieure à leur tension d'utilisation nominale.

5. Dispositif d'alimentation électrique selon l'une quelconque des revendications précédentes, caractérisé en ce que la valeur de la butée déclenchant l'alarme correspond à une luminosité égale ou supérieure à 50% de la luminosité fournie par une lampe neuve pour la tension maximale de la tension d'alimentation.

6. Dispositif d'alimentation électrique selon l'une quelconque des revendications 1 à 5, caractérisé en ce que la valeur réelle de la luminosité de la source lumineuse est mesurée au moyen d'une fibre optique (8) reliant au moins une lampe à halogène au capteur (7).

7. Dispositif d'alimentation électrique selon l'une quelconque des revendications 1 à 6, caractérisé en ce que la ou les lampes à halogène (22) présentent une distance focale élevée et en ce qu'elles éclairent un faisceau de fibres optiques en matière synthétique.

8. Dispositif d'alimentation électrique selon la revendication 3, caractérisé en ce que le détecteur de luminosité ambiante (5, 6) comporte un capteur (5) dirigé vers l'avant, un capteur (5) dirigé vers l'arrière et un capteur (5) dirigé vers le haut du dispositif d'affichage et/ou de signalisation utilisant la source lumineuse (1, 21) à lampe à halogène.

## Claims

1. Device for supplying electrical power to a light source for display and/or indication (1, 21) using halogen lamps, of the type incorporating electrical supply means (3) supplying a variable output voltage applied to the said light source, regulation means (4) connected to the said power supply means to regulate the said output voltage in response to luminosity values delivered from luminosity detection means, characterised in that:

the laid luminosity detection means consist of an ambient luminosity detector (5, 6) and a detector of the actual luminosity (7, 24) of the said light source in order to provide respectively a reference value and an actual value to the said regulation means so as to maintain an optimal contrast, and in that it incorporates in addition means for detecting ageing consisting of a comparator (9) which compares the said actual value for a maximum regulated voltage applied to the light source with a limit value corresponding to an actual luminosity value selected as being a value less than that of a new lamp in the light source supplied with the same maximum regulated voltage in order to provide an alarm signal when the actual value becomes less than the limit value.

2. Electrical power supply device according to claim 1, characterised in that the supply means consist of a chopping electrical power supply (3) incorporating a current limiter.

3. Electrical power supply device according to one of claims 1 or 2, characterised in that the ambient luminosity detector comprises several sensors (5) which are disposed in different directions and whose signals are correlated with each other.

4. Electrical power supply device according to any one of claims 1 to 3, characterised in that the halogen lamps (22) are chosen so that when they are new, the maximum regulated voltage is less than their rated service voltage.

5. Electrical power supply device according to any one of the preceding claims, characterised in that the value of the limit triggering the alarm corresponds to a luminosity equal to or greater than 50% of the luminosity provided by a new lamp at the maximum voltage of the supply voltage.

6. Electrical power supply device according to any one of claims 1 to 5, characterised in that the actual value of the luminosity of the light source is measured by means of an optical fibre (8) connecting at least one halogen lamp to the sensor (7).

7. Electrical power supply device according to any one of claims 1 to 6, characterised in that the halogen lamp or lamps (22) have a large focal distance and in that they illuminate a bundle of optical fibres made from synthetic material.

8. Electrical power supply device according to claim 3, characterised in that the ambient luminosity detector (5, 6) incorporates a sensor (5) directed forwards, a sensor (5) directed to the rear and a sensor (5) directed towards the top of the display and/or indicator device using the halogen lamp light source (1, 21).

**Patentansprüche**

1. Elektrische Speiseanordnung einer Lichtquelle (1,21) für Anzeige und/ oder Signalisation mit Halogenlampen, welche Anordnung Mittel zur elektrischen Versorgung (3), die eine variable, an die Lichtquelle anlegbare Ausgangsspannung liefern, und Regelungsmittel (4) aufweist, die mit den Mitteln zur Versorgung verbunden sind, um deren Ausgangsspannung in Abhängigkeit des von einem Helligkeitsdetektionsmittel gelieferten Helligkeitswertes zu regeln, dadurch gekennzeichnet, daß die Helligkeitsdetektionsmittel von einem Detektor (5,6) für die Umgebungshelligkeit und einem Detektor (7,24) für die wahre Helligkeit der Lichtquelle gebildet sind, um jeweils einen Sollwert bzw. einen Istwert an die Regelungsmittel in der Weise zu liefern, daß ein optimaler Kontrast eingehalten wird und daß darüber hinaus Mittel zur Alterungsdetektion vorgesehen sind, die durch einen Komparator (9) gebildet sind, der besagten Istwert für eine maximale, an die Lichtquelle anlegbare Regelspannung mit einem Grenzwert vergleicht, der einem wahren Helligkeitswert entspricht, der niedriger gewählt ist als der einer neuen Lampe der Lichtquelle, die mit der gleichen maximalen Regelspannung versorgt wird, um ein Alarmsignal zu erzeugen, sobald der Istwert kleiner wird als der Grenzwert.

2. Elektrische Speiseanordnung nach Anspruch 1, dadurch gekennzeichnet, daß die Mittel zur Versorgung durch eine elektrische Versorgung mit Anschnittsteuerung (3) gebildet sind, die einen Strombegrenzer aufweist.

3. Elektrische Speiseanordnung nach Anspruch 1 oder 2, dadurch gekennzeichnet, daß der Detektor für die Umgebungshelligkeit mehrere Meßfühler (5) umfaßt, die in verschiedenen Richtungen angeordnet sind und deren Signale untereinander korreliert werden.

4. Elektrische Speiseanordnung nach einem der Ansprüche 1 bis 3, dadurch gekennzeichnet, daß die Halogenlampen (22) in der Weise ausgewählt sind, daß in ihrem Neuzustand die maximale Regelspannung kleiner ist als ihre nominale Betriebsspannung.

5. Elektrische Speiseanordnung nach einem der vorhergehenden Ansprüche, dadurch gekennzeichnet, daß der den Alarm auslösende Grenzwert einer Helligkeit entspricht, die gleich oder größer ist als 50 % der Helligkeit, die von einer neuen Lampe für den maximalen Wert der Versorgungsspannung geliefert wird.

6. Elektrische Speiseanordnung nach einem der Ansprüche 1 bis 5, dadurch gekennzeichnet, daß der Istwert der Helligkeit der Lichtquelle mittels einer optischen Faser (8) meßbar ist, die mindestens eine Halogenlampe mit dem Meßfühler (7) verbindet.

7. Elektrische Speiseanordnung nach einem der Ansprüche 1 bis 6, dadurch gekennzeichnet, daß die Halogenlampe(n) (22) eine erhöhte Brennweite aufweisen und daß sie ein Bündel von optischen Fasern aus Synthetikmaterial beleuchten.

8. Elektrische Speiseanordnung nach Anspruch 3, dadurch gekennzeichnet, daß der Detektor (5,6) für die Umgebungshelligkeit einen Meßfühler (5) in Richtung zur Rückseite, einen Meßfühler (5) in Richtung zur Vorderseite und einen Meßfühler (5) in Richtung zur Oberseite der Anzeige- und/oder Signaleinrichtung aufweist, die eine Lichtquelle (1,21) mit Halogenlampen aufweist.

FIG.1

FIG.2